Europäisches Patentamt

European Patent Office

Office européen des brevets

(11) Veröffentlichungsnummer: **0 487 760 A1**

# (12) EUROPÄISCHE PATENTANMELDUNG

(21) Anmeldenummer: **90122567.2**

(22) Anmeldetag: **26.11.90**

(51) Int. Cl.5: **B60R 22/42**, B60R 22/28

(43) Veröffentlichungstag der Anmeldung:
**03.06.92 Patentblatt 92/23**

(84) Benannte Vertragsstaaten:
**DE ES FR GB IT SE**

(71) Anmelder: **TRW REPA GMBH**
**Industriestrasse 20**
**W-7077 Alfdorf(DE)**

(72) Erfinder: **Föhl, Arthur**
**Auf der Halde 28**
**W-7060 Schorndorf(DE)**

(74) Vertreter: **Degwert, Hartmut, Dipl.-Phys. et al**
**Patent Attorneys Prinz, Leiser, Bunke &**
**Partner Manzingerweg 7**
**W-8000 München 60(DE)**

(54) Sicherheitsgurt-Rückhaltesystem für Fahrzeuge.

(57) Das Sicherheitsgurt-Rückhaltesystem für Fahrzeuge ist mit einem fahrzeugsensitiv und/oder gurtbandsensitiv selbstsperrenden Gurtaufroller (10) und einer diesem nachgeordneten Gurtband-Klemmeinrichtung (12) versehen. Um eine schnelle Aktivierung der Gurtband-Klemmeinrichtung (12) bei minimalem Gurtbandabzug zu erreichen, das Gurtband jedoch vor Beschädigung durch den Klemmvorgang zu schützen, ist die durch die Gurtband-Klemmeinrichtung (12) auf das Gurtband (28) ausgeübte Hemmkraft durch Dimensionierung und Gestaltung des Systems auf einen vorbestimmten Wert begrenzt, bei dem die Gurtband-Klemmeinrichtung (12) keine beachtliche Schwächung des Gurtbandes (28) bewirkt. Der Gurtaufroller (10) ist seinerseits mindestens für die Aufnahme der bei einem Unfallgeschehen erwarteten, über das Gurtband (28) eingeleiteten und über den vorbestimmten Wert hinausgehenden Kräfte dimensioniert, so daß er bei Überschreitung dieses Wertes die Blockierlast aufnehmen kann, wenn das Gurtband beispielsweise an der Gurtband-Klemmeinrichtung durchrutscht.

Fig .1

EP 0 487 760 A1

Die Erfindung betrifft ein Sicherheitsgurt-Rückhaltesystem für Fahrzeuge, mit einem fahrzeugsensitiv und/oder gurtbandsensitiv selbstsperrenden Gurtaufroller und einer diesem nachgeordneten Gurtband-Klemmeinrichtung.

In solchen Systemen hat die Gurtband-Klemmeinrichtung die Aufgabe, bei einer fahrzeugsensitiv oder gurtbandsensitiv ausgelösten Sperrung des Gurtaufrollers den Filmspuleneffekt zu eliminieren, der bei herkömmlichen Gurtaufrollern ursächlich für das Abziehen einiger Zentimeter Gurtbandlänge durch Straffung des Gurtbandwickels nach Blockierung der Gurtspule ist. Durch die Gurtband-Klemmeinrichtung wird auch der Gurtaufroller entlastet, so daß dieser in der Praxis für geringe mechanische Belastungen dimensioniert wird.

Gurtband-Klemmeinrichtungen werden in zunehmendem Umfang eingesetzt, da sie die Vorwärtsbewegung des Fahrzeuginsassen bei einem Fahrzeugaufprall minimieren, indem sie gewährleisten, daß nach der Sperrung des Gurtaufrollers kein oder nur wenig weiteres Gurtband vom Gurtaufroller abgezogen werden kann. Die erreichbare Klemmwirkung ist jedoch begrenzt, da bei zunehmender Zugkraft die senkrecht auf das Gurtband gerichteten Anpreßkräfte entsprechend größer werden und eine Beschädigung der Gewebestruktur des Gurtbandes verursachen können, was in der Regel zum Riß des Gurtbandes führt.

Von diesen Erkenntnissen ausgehend wird durch die Erfindung ein Sicherheitsgurt-Rückhaltesystem für Fahrzeuge geschaffen, bei welchem die von der Gurtband-Klemmeinrichtung geleistete Blockierfunktion nur bis zu einem vorbestimmten Wert der Zugspannung im Gurtband wirksam ist; dieser Wert ist so gewählt, daß mit Sicherheit noch keinerlei Beschädigung des Gurtbandes zu befürchten ist. Bei weiter ansteigender Zuglast im Gurtband übernimmt der Gurtaufroller die Sperrfunktion. Der Gurtaufroller ist also für die Aufnahme der bei einem Unfallgeschehen erwarteten, über das Gurtband eingeleiteten und über den vorbestimmten Wert hinausgehenden Kräfte dimensioniert. Bei Erreichen des vorbestimmten Wertes kann eine gewisse Gurtbandlänge abgezogen werden, bis die Blockierwirkung des Gurtaufrollers eingetreten ist. Dieser Effekt ist aber durchaus erwünscht, da er einen Abbau von Belastungsspitzen zur Folge hat. Der vorbestimmte Wert, auf den die Klemmwirkung der Gurtband-Klemmeinrichtung begrenzt ist, liegt in einem Bereich von etwa 6000 N bis 12 000 N. Dieser Wert ist zum einen von der Beschaffenheit der Klemmflächen abhängig, da diese den größten Einfluß auf die Gefahr einer Gurtbandbeschädigung hat, und zum anderen von der Einbaulage der Klemmeinrichtungen, da Gurtbandumlenkungen sich auf die Belastbarkeit des Gurtbandes auswirken.

Die Begrenzung der Klemmwirkung auf den vorbestimmten Wert der Zugkraft im Gurtband kann auf verschiedene Weise erreicht werden. Eine erste Ausführungsform besteht darin, daß die senkrecht zur Gurtbandfläche gerichteten Anpreßkräfte der Klemmelemente begrenzt werden. Bei Erreichen des vorbestimmten Wertes rutscht dann das Gurtband zwischen den Klemmflächen durch. Bei einer anderen Ausführungsform wird ein walzenförmiges Klemmelement verwendet. Ein solches Klemmelement ist insofern vorteilhaft, als es sehr schnell anspricht und nach erfolgter Klemmung auch leicht gelöst werden kann. Zugleich ist die mit einem walzenförmigen Klemmelement erreichbare Klemmwirkung prinzipiell auf mäßige Zugkräfte im Gurtband begrenzt; das Gurtband neigt bei höheren Zugkräften ohnehin zum Durchrutschen.

Eine besonders zweckmäßige Ausführungsform besteht darin, daß der Gurtaufroller und die Gurtband-Klemmeinrichtung miteinander durch Verbindungsmittel verbunden sind, die bei Erreichen des vorbestimmten Wertes unter plastischer Verformung nachgeben und eine begrenzte Entfernung der Gurtband-Klemmeinrichtung von dem Gurtaufroller zulassen. Diese Entfernung der Gurtband-Klemmeinrichtung vom Gurtaufroller bei gleichzeitiger plastischer Verformung der Verbindungsmittel wird ausgenutzt, um Belastungsspitzen im Gurtsystem abzubauen.

Für das erfindungsgemäße Sicherheitsgurt-Rückhaltesystem kommen besonders solche Gurtaufroller in Betracht, die mit einer indirekten fahrzeugsensitiven und/oder gurtbandsensitiven Steuerung der Blockierfunktion arbeiten. Solche Systeme sprechen sehr schnell an, so daß bei Erreichen eines vorbestimmten Wertes der Fahrzeugverzögerung bis zum Eintritt der Gurtspulenblockierung, die für die Ansteuerung der Gurtband-Klemmeinrichtung ausgenutzt wird, kaum Gurtband abgezogen wird. Diese Gurtspulenblockierung wird aber nur zur Ansteuerung der Gurtband-Klemmeinrichtung ausgenutzt. Bei zunehmender Belastung des Gurtaufrollers, nachdem der vorbestimmte Wert erreicht ist, auf den die Wirkung der Gurtband-Klemmeinrichtung begrenzt ist, wird der lasttragende Sperrmechanismus des Gurtaufrollers aktiviert. Besonders zweckmäßig sind Ausführungen, bei denen die Gurtspule radial nachgiebig gelagert und mit einer Sperrverzahnung versehen ist, die mit einer entsprechenden Sperrverzahnung am Gehäuse des Gurtaufrollers zusammenwirkt. Bei zunehmender Belastung des Gurtaufrollers wird dann, da die Gurtspule fahrzeugsensitiv oder gurtbandsensitiv blockiert ist, diese Gurtspule in Radialrichtung verlagert, bis ihre Sperrverzahnung mit der entsprechenden Sperrverzahnung am Gehäuse des Gurtaufrollers in Eingriff gelangt ist. Etwaiger weiterer Gurtbandabzug aufgrund des Filmspuleneffektes ist nicht nur unschädlich, sondern sogar erwünscht, da er einen Abbau von Belastungsspitzen im Gurtsystem zur Folge hat.

Weitere Merkmale und Vorteile der Erfindung ergeben sich aus der folgenden Beschreibung mehrerer Ausführungsformen und aus der Zeichnung, auf die Bezug genommen wird. In der Zeichnung zeigen:

Fig. 1      eine teilweise im Schnitt gezeigte, schematische Seitenansicht einer Ausführungsform eines Gurtaufrollers mit nachgeschalteter Gurtband-Klemmeinrichtung im Zustand beginnender Klemmwirkung;

Fig. 2      die gleiche Ansicht wie Fig. 1, jedoch im Zustand einer hohen Zugbelastung;

Fig. 3      eine auseinandegezogene Perspektivansicht des in den Fig. 1 und 2 gezeigten Systems;

Fig. 4      eine schematische Detailansicht einer ersten Ausführungsform der Lagerung einer Gurtspule;

Fig. 5      eine zweite Ausführungsform der Lagerung einer Gurtspule;

Fig. 6      einen schematischen Teil-Längsschnitt einer besonderen Ausführungsform einer Gurtband-Klemmeinrichtung;

Fig. 7      eine Perspektivansicht eines Gurtaufrollers und einer mit diesem verbundenen Gurtband-Klemmeinrichtung im Zustand vor dem Auftreten einer hohen Belastung;

Fig. 8      das in Fig. 7 gezeigte System nach dem Auftreten einer gesteigerten Belastung;

Fig. 9      das in Fig. 8 gezeigte System nach weiterer hoher Belastung;

Fig. 10      eine weitere Ausführungsform in Perspektivansicht vor dem Auftreten einer hohen Belastung; und

Fig. 11      die in Fig. 10 gezeigte Ausführungsform nach dem Auftreten einer hohen Belastung.

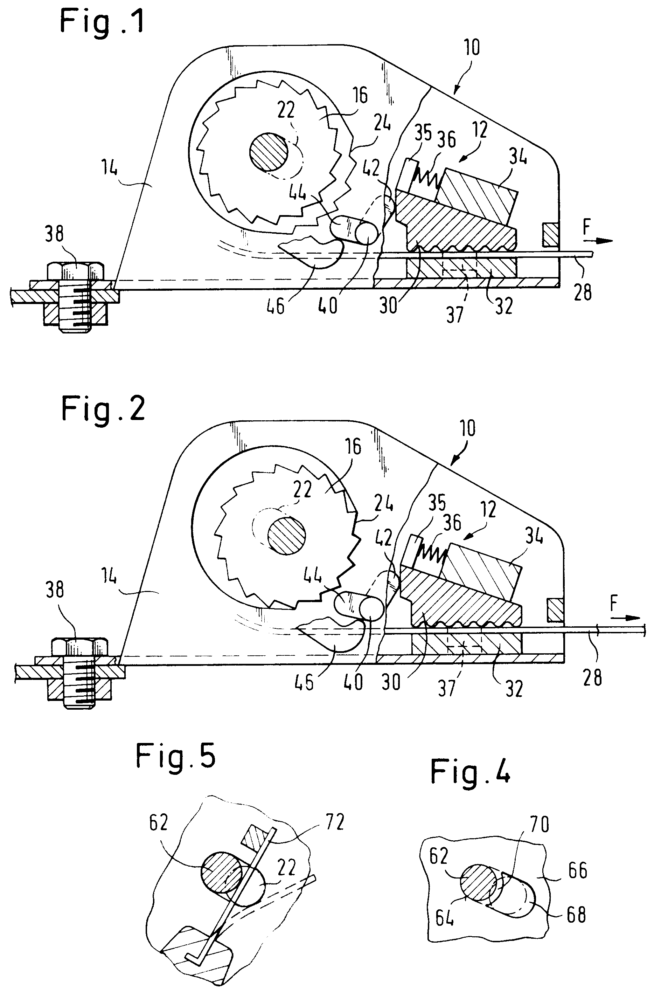

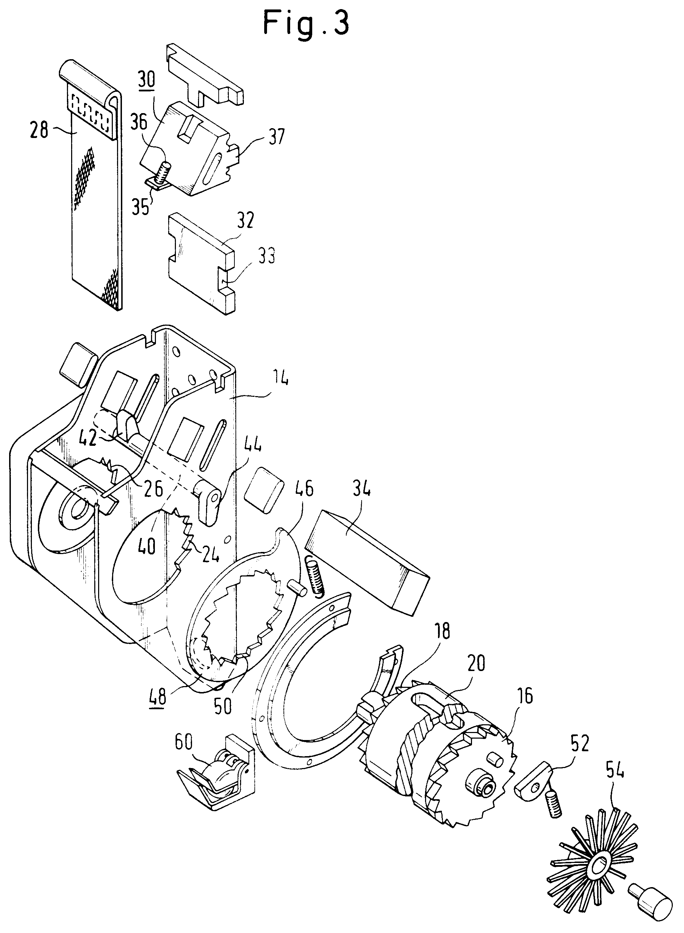

Bei der in den Figuren 1 bis 3 gezeigten Ausführungsform sind ein allgemein mit 10 bezeichneter Gurtaufroller und eine allgemein mit 12 bezeichnete Gurtband-Klemmeinrichtung in einem gemeinsamen, im Querschnitt U-förmigen Gehäuse 14 angeordnet. Die mit seitlich angeformten Sperrzahnrädern 16, 18 versehene Gurtspule 20 ist radial nachgiebig beispielsweise in Langlöchern 22 der Seitenschenkel des Gehäuses 14 gelagert. Die Sperrzahnräder 16, 18 wirken in bekannter Weise mit einer Sperrverzahnung 24, 26 zusammen, die in Öffnungen der Seitenschenkel des Gehäuses 14 angebracht sind. Das von der Gurtspule 20 ablaufende Gurtband 28 ist durch die miteinander zusammenwirkenden Klemmelemente der Gurtband-Klemmeinrichtung 12 geführt, die dem Gurtaufroller 10 nachgeordnet ist. Diese Klemmelemente bestehen aus einem keilförmigen Klemmschuh 30 und einer diesem gegenüberliegenden Klemmplatte 32. Die Klemmplatte 32 ist in Längsrichtung des Gurtbandes 28 verschiebbar gelagert und steht über in seitliche Aussparungen 33 eingreifende Ansätze 36 des Klemmschuhs 30 mit diesem in kraftschlüssiger Verbindung. Der Klemmschuh 30 stützt sich auf seiner vom Gurtband 28 abgewandten Rampenfläche an einem stegförmigen Stützelement 34 ab, das in entsprechenden Ausnehmungen der Seitenschenkel des Gehäuses 14 befestigt ist. Bei der in den Figuren 1 und 2 gezeigten Ausführungsform wird der Klemmschuh 30 durch eine zwischen einem Ansatz 35 desselben und dem Stützelement 34 abgestützte Druckfeder 36 in eine von dem Gurtband 28 entfernte Ruhestellung vorbelastet. Der Klemmschuh 30 ist auf seiner dem Gurtband 28 zugewandten Klemmfläche mit einer gurtbandschonenden, jedoch den Kraftschluß unterstützenden, gewellten Oberflächengestaltung versehen. Das Gehäuse 14 ist mittels eines Bolzens 38 am Fahrzeugaufbau befestigt. Die Aktivierung der Gurtband-Klemmeinrichtung 12 erfolgt über einen mittels einer Welle 40 zwischen den Seitenschenkeln des Gehäuses 14 schwenkbar gelagerten, zweiarmigen Hebel, dessen erster Hebelarm 42 an einer Stirnfläche des Klemmschuhs 30 in Anlage ist und dessen anderer Hebel 44 durch einen Betätigungsansatz 46 an einem Steuerring 48 beaufschlagbar ist. Dieser Steuerring 48 ist mit einer Innenverzahnung 50 versehen und umgibt eine Steuerklinke 52, die an der Seite des Sperrzahnrades 16 schwenkbar gelagert ist. An diesem Sperrzahnrad 16 ist ferner eine sternförmig verzahnte Steuerscheibe 54 drehbar gelagert. Diese Steuerscheibe 54 weist in bekannter Weise einen Steuernocken auf, der an der Steuerklinke 52 angreift, um diese bei Bedarf in die Steuerverzahnung 50 des Steuerringes 48 einzusteuern. Der Steuerring 48 ist dann drehfest mit der Gurtspule 20 gekoppelt, so daß ein Gurtbandabzug zu einer Verdrehung des Steuerringes 48 führt, dessen Betätigungsansatz 46 dann über die Hebelarme 42, 44 den Klemmschuh 30 beaufschlagt, so daß dieser gegen das Gurtband 28 gedrückt wird. Die Einsteuerung der Steuerklinke 52 in die Steuerverzahnung 50 erfolgt, wenn das Steuerzahnrad 54 mittels eines fahrzeugsensitiven Sensors 60 oder gurtbandsensitiv aufgrund seiner Massenträgheit angehalten wird und gegenüber der Drehung der Gurtspule 20 zurückbleibt. Dieses indirekte Ansteuerprinzip ist bekannt und wird daher nicht näher beschrieben.

Solange das Gurtband 28 durch die Gurtband-Klemmeinrichtung 12 blockiert ist, verbleibt der Gurtaufroller 10 in dem in Fig. 1 gezeigten Zustand. Die Gurtband-Klemmeinrichtung 12 ist aber so ausgebildet, daß sie ab einem vorbestimmten Wert des Gurtzuges, der in Fig. 1 mit einem Pfeil F angedeutet ist und in einer Größenordnung von etwa 6000 N bis 12 000 N liegt, das Gurtband durchrutschen läßt, um dieses vor jeglicher Beschädigung zu bewahren. Da die Gurtspule 20 über die Steuerklinke 52, den Steuerring 48 und dessen Abstützung am Klemmschuh 30 über die Hebelarme 42, 44 an einer Drehbewegung gehindert ist, wird sie unter weiterem Zug über das Gurtband 28 aufgrund ihrer radial nachgiebigen Lagerung in Richtung der Sperrverzahnung 24, 26 in den Öffnungen der Seitenschenkel des Gehäuses 14 verlagert, bis ihre Sperrzahnräder 16, 18 mit den Sperrverzahnungen 24, 26 in Eingriff gelangt sind. Die Gurtspule 20 ist nun lasttragend gesperrt; die über den vorbestimmten Wert, bei dem das Gurtband 28 zwischen Klemmschuh 30 und Klemmplatte 32 durchrutscht, hinausgehenden Beanspruchungen werden über die Gurtspule 20 von den Sperrverzahnungen 24, 26 aufgenommen.

Bei dem erfindungsgemäßen Sicherheitsgurt-Rückhaltesystem setzt die Klemmwirkung der Gurtband-Klemmeinrichtung 12 unmittelbar nach fahrzeugsensitiver oder gurtbandsensitiver Aktivierung des Gurtspulen-Blockiermechanismus ein. Im Falle eines Fahrzeugaufpralls ist daher die Vorfallstrecke für den Fahrzeuginsassen minimal. Mit zunehmender Zugkraft F im Gurtband 28 wird wegen der Keilform des Klemmschuhs 30 die Gurtbandpressung zwischen Klemmschuh und Klemmplatte 32 selbsttätig verstärkt. Durch die Paarung der Gleiteigenschaften an den Klemmflächen des Klemmschuhs 30 und der Klemmplatte 32 einerseits sowie des Gurtbandes 28 andererseits ist gewährleistet, daß bei weiterer Zunahme der Zugkraft F das Gurtband 28 zwischen Klemmschuh 30 und Klemmplatte 32 durchrutscht, ohne beschädigt zu werden. Das Durchrutschen des Gurtbandes 28 erfolgt aber zunächst nur über wenige Millimeter, die ausreichen, um die Sperrzahnräder 16, 18 der Gurtspule 20 in die Sperrverzahnungen 24, 26 einzusteuern. Der anschließend auftretende Filmspuleneffekt, der unter Umständen einen weiteren Gurtbandabzug um einige Millimeter bis maximal zu wenigen Zentimetern ermöglicht, bewirkt einen Abbau von Belastungsspitzen im Gurtbandsystem und ist daher erwünscht.

Bei der in Fig. 4 gezeigten Variante einer radial nachgiebigen Lagerung der Gurtspule ist diese an jedem Ende mit einem zylindrischen Lagerfortsatz 62 versehen, der in einer passenden Öffnung 64 eines Gehäusedeckels 66 aus elastisch nachgiebigem Kunststoffmaterial aufgenommen ist. Zur Seite der Sperrverzahnung 24 bzw. 26 hin ist der Gehäusedeckel 66, der auf das Gehäuse 14 aufgesetzt ist, mit einer Aussparung 68 versehen. Der Wandungsteil 70 zwischen dieser Aussparung 68 und der Lageröffnung 64 ist aufgrund seiner Dimensionierung geschwächt und gibt zunächst elastisch nach, bis er bei höherer Belastung abreißt und das Eintreten des Lagerfortsatzes 62 in die Aussparung 68 ermöglicht.

Bei der in Fig. 5 gezeigten Ausführungsform einer radial nachgiebigen Lagerung der Gurtspule sind deren zylinderförmige Lageransätze 64 jeweils in einem Langloch 22 eines Gehäusedeckels aufgenommen. Eine an ihrem einen Ende fest eingespannte Blattfeder 72 drückt jeweils den benachbarten Lagerfortsatz 64 gegen das eine Ende des Langlochs 22. Innerhalb des Langlochs 22 ist jeder Lagerfortsatz 64 entgegen der Kraft der Blattfeder 72 bis zum gegenüberliegenden Ende des Langlochs 22 verlagerbar.

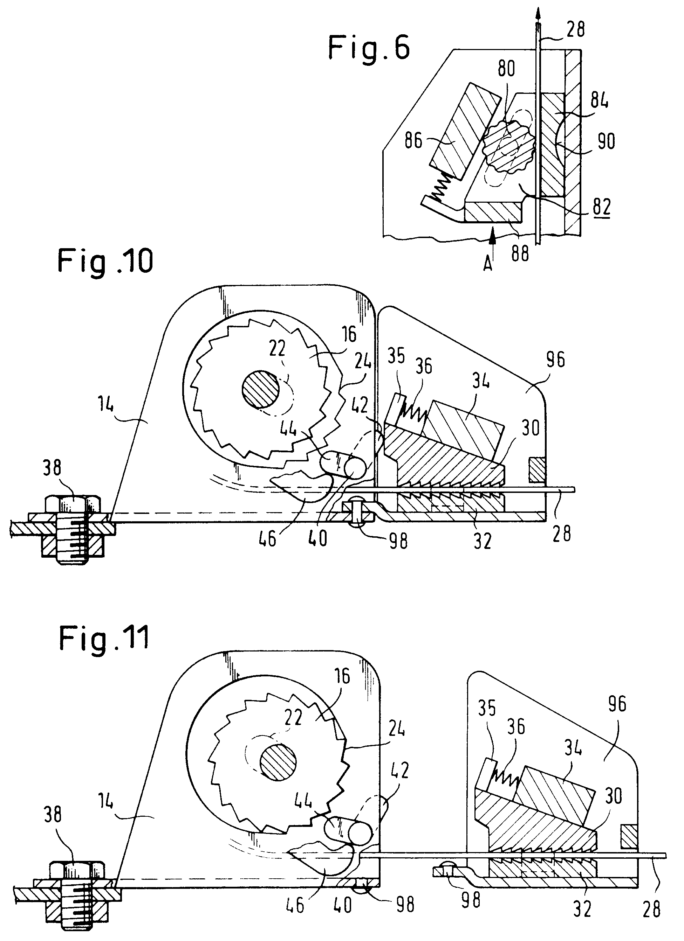

Eine vorteilhafte Ausführungsform einer Gurtband-Klemmeinrichtung ist in Fig. 6 schematisch gezeigt. Bei dieser Ausführungsform besteht das Klemmelement aus einer zylindrischen Walze 80, die an ihrem Außenumfang gewellt oder mit einer gewebeschonenden Verzahnung versehen ist, aber auch glatt sein kann. Die Walze 80 ist mit radialem Spiel in den beiden einander gegenüberliegenden Schenkeln eines Bügels 82 drehbar gelagert. Die Grundplatte 84 dieses Bügels 82 bildet eine Klemmplatte analog der Klemmplatte 32 bei der Ausführungsform nach den Figuren 1 bis 3. Auf ihrer vom Gurtband 28 abgewandten Seite stützt sich die Walze 80 an einem schräg zur Längsrichtung des Gurtbandes 28 geneigten Stützelement 86 ab. Der Bügel 82 weist eine Stirnwand 88 auf, auf deren Außenfläche eine Aktivierungskraft A einwirkt, die über einen Hebelarm wie den Hebelarm 42 bei der Ausführungsform nach den Figuren 1 bis 3 aufgebracht werden kann. Die Klemmplatte 84 ist auf ihrer von der Walze 80 abgewandten Seite mit einer teilzylindrischen Aussparung 90 versehen, durch die ihre Biegesteifigkeit vermindert wird. Ab einem bestimmten und im voraus gut bekannten Druck gibt die Klemmplatte 84 im Bereich ihrer Aussparung 90 nach und nimmt einen gebogenen Zustand an, so daß sie der Walze 80 ausweicht und eine weitere Steigerung der Gurtbandpressung vermieden wird. Das Gurtband 28 kann daher zwischen der Walze 80 und der ihm zugewandten Fläche der Klemmplatte 84 durchrutschen.

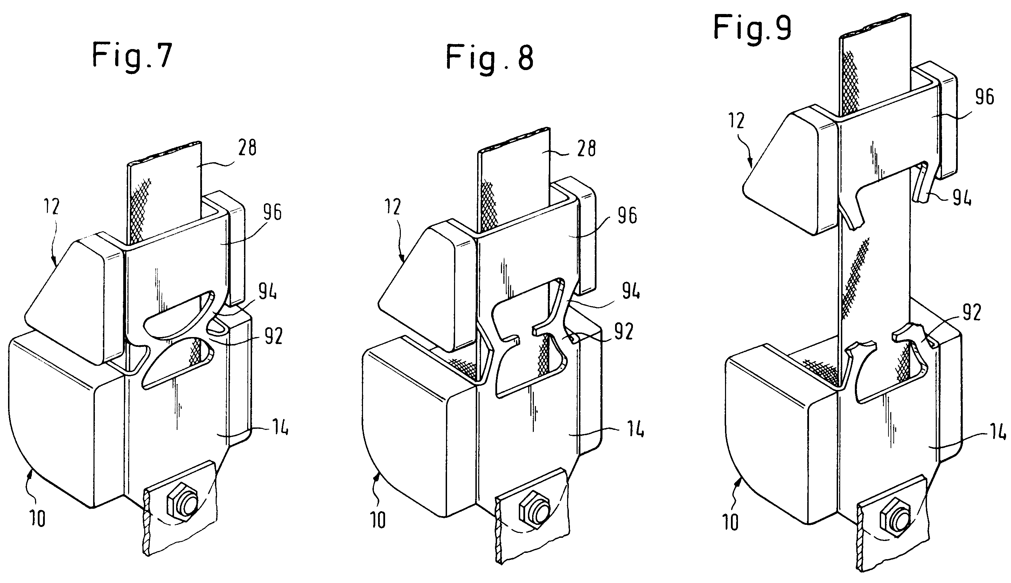

Bei der Ausführungsform nach den Figuren 7, 8 und 9 ist das Gehäuse 14 des Gurtaufrollers über einen bogenförmigen Steg 92 mit einem entgegengesetzt gebogenen Steg 94 des Gehäuses 96 der Gurtband-Klemmeinrichtung verbunden. Die Stege 92, 94 sind an ihren Scheiteln miteinander verschmolzen und an ihren freien Enden jeweils an das zugehörige Gehäuse angeschlossen.

Die Breite der bogenförmigen Schenkel 92, 94 ist im Bereich ihrer Scheitel am geringsten, so daß dort eine Sollbruchstelle entsteht. Wenn der vorbestimmte Wert erreicht ist, bis zu dem die Gurtbandblockierung allein durch die Gurtband-Klemmeinrichtung erfolgen soll, beginnen die Stege 92, 94, sich plastisch zu verformen. Dabei entfernen sich die Gehäuse 14, 96 voneinander. Ab einem bestimmten Belastungswert reißen die Stege 92, 94 an ihrer Vereinigungsstelle im Bereich ihrer Scheitel ab. Die verbleibenden Stegabschnitte werden weiter gedehnt, bis etwa der in Fig. 8 gezeigte Zustand erreicht ist. Die Strecke D, um die sich die beiden Gehäuse 14, 96 voneinander entfernt haben, reicht aus, um die Sperrzahnräder 16, 18 der Gurtspule 20 in Eingriff mit den gehäusefesten Sperrverzahnungen 24, 26 zu verlagern. Bei der plastischen Verformung der Stege 92, 94 wird Arbeit verrichtet, also Energie absorbiert, wodurch in erwünschter Weise Belastungsspitzen im Gurtsystem abgebaut werden. Ein vollständiges Abreißen der Stege 92, 94, wie in Fig. 9 gezeigt, ist unschädlich, wenn der Gurtaufroller 10 ausreichend robust dimensioniert wird, um die gesamte Blockierlast aufnehmen zu können.

Die bevorzugte Ausführungsform nach den Fig. 10 und 11 unterscheidet sich von der nach den Fig. 7, 8 und 9 dadurch, daß die Gehäuse 14 und 96 durch abscherbare Verbindungsmittel, insbesondere Scherstifte 98, miteinander verbunden sind. Fig. 10 zeigt den Zustand vor, Fig. 11 den nach einer Unfallbelastung, bei welcher der vorbestimmte Wert, für den die Scherstifte 98 dimensioniert sind, überschritten wurde. Ferner sind bei dieser Ausführungsform die Klemmflächen von Klemmschuh 30 und Klemmplatte 32 mit einer Verzahnung ausgeführt, um die erreichbare Klemmkraft, bei der noch keine Gurtbandbeschädigung erfolgt, zu erhöhen.

**Patentansprüche**

1. Sicherheitsgurt-Rückhaltesystem für Fahrzeuge, mit einem fahrzeugsensitiv und/oder gurtbandsensitiv selbstsperrenden Gurtaufroller (10) und einer diesem nachgeordneten Gurtband-Klemmeinrichtung (12), dadurch gekennzeichnet, daß die durch die Gurtband-Klemmeinrichtung (12) auf das Gurtband (28) ausgeübte Hemmkraft durch Dimensionierung und Gestaltung des Systems auf einen vorbestimmten Wert begrenzt ist, bei dem die Gurtband-Klemmeinrichtung (12) keine beachtliche Schwächung des Gurtbandes (28) bewirkt, und daß der Gurtaufroller (10) mindestens für die Aufnahme der bei einem Unfallgeschehen erwarteten, über das Gurtband (28) eingeleiteten und über den vorbestimmten Wert hinausgehenden Kräfte dimensioniert ist.

2. Sicherheitsgurt-Rückhaltesystem nach Anspruch 1, dadurch gekennzeichnet, daß der vorbestimmte Wert in einem Bereich von etwa 6000 N bis 12 000 N liegt.

3. Sicherheitsgurt-Rückhaltesystem nach Anspruch 1 oder 2, dadurch gekennzeichnet, daß bei Erreichen des vorbestimmten Wertes das Gurtband (28) zwischen den Klemmflächen der Gurtband-Klemmeinrichtung (12) durchrutscht.

4. Sicherheitsgurt-Rückhaltesystem nach Anspruch 3, dadurch gekennzeichnet, daß die Gurtband-Klemmeinrichtung (12) ein walzenförmiges Klemmelement (80) aufweist.

5. Sicherheitsgurt-Rückhaltesystem nach Anspruch 3, dadurch gekennzeichnet, daß die dem walzenförmigen Klemmelement (80) gegenüberliegende Klemmfläche an einer Klemmplatte (84) gebildet ist, die bei Erreichen des vorbestimmten Wertes nachgibt.

6. Sicherheitsgurt-Rückhaltesystem nach Anspruch 5, dadurch gekennzeichnet, daß die Klemmplatte (84) an der Basis eines Bügels (82) angeordnet ist, in dessen Schenkeln das walzenförmige Klemmelement (80) mit radialem Spiel drehbar gelagert ist.

7. Sicherheitsgurt-Rückhaltesystem nach Anspruch 1 oder 2, dadurch gekennzeichnet, daß der Gurtaufroller (10) und die Gurtband-Klemmeinrichtung (12) miteinander durch Verbindungsmittel (92, 94) verbunden sind, die bei Erreichen des vorbestimmten Wertes unter plastischer Verformung nachgeben und eine begrenzte Entfernung der Gurtband-Klemmeinrichtung (12) von dem Gurtaufroller (10) zulassen.

8. Sicherheitsgurt-Rückhaltesystem nach Anspruch 7, dadurch gekennzeichnet, daß die lasttragenden Gehäuse (14, 96) des Gurtaufrollers (10) und der Gurtband-Klemmeinrichtung (12) durch verformbare Stege (92, 94) miteinander verbunden sind.

9. Sicherheitsgurt-Rückhaltesystem nach Anspruch 8, dadurch gekennzeichnet, daß die verformbaren Stege (92, 94) bogenförmig und an die einander benachbarten Gehäuseenden angeschlossen sowie an ihren Scheiteln miteinander vereinigt sind und im Bereich ihrer Vereinigung eine Sollbruchstelle bilden.

**10.** Sicherheitsgurt-Rückhaltesystem nach Anspruch 1 oder 2, dadurch gekennzeichnet, daß die Gehäuse (14, 96) des Gurtaufrollers (10) und der Gurtband-Klemmeinrichtung (12) durch Verbindungsmittel (98) verbunden sind, die bei Erreichen des vorbestimmten Wertes nachgeben und eine Trennung der Gehäuse (14, 96) voneinander zulassen.

**11.** Sicherheitsgurt-Rückhaltesystem nach Anspruch 8, dadurch gekennzeichnet, daß die Verbindungsmittel durch abscherbare Elemente wie Scherstifte gebildet sind.

**12.** Sicherheitsgurt-Rückhaltesystem nach einem der vorstehenden Ansprüche, dadurch gekennzeichnet, daß der Gurtaufroller (10) eine radial nachgiebig in seinem Gehäuse gelagerte Gurtspule (20) aufweist.

**13.** Sicherheitsgurt-Rückhaltesystem nach Anspruch 12, dadurch gekennzeichnet, daß die Gurtspule (20) mit Sperrzahnrädern (16, 18) versehen ist, die mit entsprechenden Sperrverzahnungen (24, 26) am Gehäuse (14) des Gurtaufrollers zusammenwirken.

**14.** Sicherheitsgurt-Rückhaltesystem nach einem der vorstehenden Ansprüche, dadurch gekennzeichnet, daß der Gurtaufroller (10) mit einer fahrzeugsensitiv und/oder gurtbandsensitiv aktivierbaren, an der Gurtspule (20) gelagerten Steuerklinke (52) versehen ist, die mit einem sie umgebenden, eine Innenverzahnung (50) aufweisenden Steuerring (48) zusammenwirkt, durch dessen begrenzte Verdrehung die Gurtband-Klemmeinrichtung (12) aktivierbar ist.

**15.** Sicherheitsgurt-Rückhaltesystem nach Anspruch 14, dadurch gekennzeichnet, daß der Steuerring (48) einen Betätigungsansatz (46) aufweist, der direkt oder über einen Umlenkhebel (42, 44) auf ein bewegliches Klemmelement (30) der Gurtband-Klemmeinrichtung (12) drückt.

**Fig .1**

**Fig .2**

**Fig.5**

**Fig.4**

# Fig.3

## Fig.6

## Fig.10

## Fig.11

Fig.7

Fig.8

Fig.9

Europäisches
Patentamt

**EUROPÄISCHER RECHERCHENBERICHT**

Nummer der Anmeldung

EP    90 12 2567
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | GB-A-2099685 (TAKATA KOJYO CO. LTD) <br> * Seite 1, Zeile 82 - Seite 4, Zeile 49; Figuren * | 1, 3 | B60R22/42 <br> B60R22/28 |
| Y | | 2, 4-7, 12-15 | |
| | --- | | |
| Y | FR-A-2154049 (TAKATA KOJYO CO. LTD) <br> * Seite 1, Zeile 36 - Seite 2, Zeile 31; Figur 12 * | 2 | |
| | --- | | |
| Y | GB-A-1005301 (IRWIN AIR CHUTE OF G.B. LTD) <br> * Seite 3, Zeile 94 - Seite 4, Zeile 2; Figuren 1, 2 * | 4-6 | |
| | --- | | |
| Y | US-A-3535001 (G.F. LEWIS ET AL.) <br> * Spalte 4, Zeilen 1 - 27; Figuren 1-4 * <br> * Spalte 4, Zeile 69 - Spalte 5, Zeile 36 * | 7 | |
| | --- | | |
| Y | DE-A-3417877 (BRITAX-KOLB GMBH & CO) <br> * Seite 11, Zeile 28 - Seite 12, Zeile 3 * <br> * Seite 14, Zeilen 7 - 19; Figuren 2, 3 * | 12, 13 | RECHERCHIERTE SACHGEBIETE (Int. Cl.5 ) |
| | --- | | |
| Y | DE-U-8915315 (TRW REPA GMBH) <br> * Anspruch 1; Figur 1 * | 14, 15 | B60R |
| | --- | | |
| X | US-A-4420126 (ANDO) <br> * das ganze Dokument * | 1, 3 | |
| A | | 11 | |
| | --- | | |
| X | DE-B-2401703 (CARL STAHL, GURT-UND BANDWEBEREI) <br> * Spalte 4, Zeile 20 - Spalte 6, Zeile 38; Figuren * | 1 | |
| Y | * Spalte 4, Zeilen 7 - 12 * | 7, 8 | |
| | --- | | |
| Y | GB-A-2216773 (GENERAL ENGINEERING (NETHERLANDS) B.V.) <br> * Seite 11, Zeile 21 - Seite 14, Zeile 2; Figuren * | 7, 8 | |
| | --- | | |
| | -/-- | | |

Der vorliegende Recherchenbericht wurde für alle Patentansprüche erstellt

| Recherchenort | Abschlußdatum der Recherche | Prüfer |
|---|---|---|
| DEN HAAG | 08 AUGUST 1991 | DUBOIS B.F.J. |

EPO FORM 1503 03.82 (P0403)

Europäisches
Patentamt

**EUROPÄISCHER RECHERCHENBERICHT**

Nummer der Anmeldung

EP    90 12 2567
Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | FR-A-2188451 (REGIE NATIONALE DES USINES RENAULT & AUTOMOBILES PEUGEOT) <br> * Seite 6, Zeilen 4 - 15; Ansprüche 1, 9, 10, 13; Figur 4 * <br> ----- | 8, 9 | |
| | | | **RECHERCHIERTE SACHGEBIETE (Int. Cl.5 )** |

Der vorliegende Recherchenbericht wurde für alle Patentansprüche erstellt

| Recherchenort | Abschlußdatum der Recherche | Prüfer |
|---|---|---|
| DEN HAAG | 08 AUGUST 1991 | DUBOIS B.F.J. |

EPO FORM 1503 03.82 (P0403)